# EUROPEAN PATENT APPLICATION

(11) **EP 4 703 393 A1**
(43) Date of publication of application: **04.03.2026**
(21) Application number: 24796680.7
(22) Date of filing: 27.03.2024
(51) Int. Cl.: C08F 20/14, C08K 5/05, C08L 33/12

(54) **COMPOSITION, POLYMER, CURED PRODUCT, MOLDED BODY, AND METHOD FOR PRODUCING POLYMETHYL METHACRYLATE**

(30) Priority: 28.04.2023 JP 2023075182
(71) Applicant: Sumitomo Chemical Company, Limited, Tokyo 103-6020 (JP)
(72) Inventor: OKAZAKI, Ryosuke, Niihama-shi, Ehime 792-8521 (JP)
(74) Representative: Global IP Europe Patentanwaltskanzlei
(86) International application number: PCT/JP2024/012193
(87) International publication number: WO 2024/224922

(57) **Abstract**

An object of the present invention is to provide a composition having excellent storage stability, a polymer, a cured product, and a molded body obtained using the composition, and a method for producing polymethyl methacrylate using the composition. The present invention relates to a composition containing methyl methacrylate and an alcohol having 4 carbon atoms, in which a concentration of the alcohol having 4 carbon atoms is 5 ppm by mass to 10,000 ppm by mass based on the total composition.

## Description

### TECHNICAL FIELD

The present disclosure relates to a composition, a polymer, a cured product, a molded body, and a method for producing polymethyl methacrylate.

### BACKGROUND ART

Poly(methyl methacrylate) obtained by polymerizing methyl methacrylate is used in various fields as a resin material having excellent transparency and weather resistance. As resource prices have risen in recent years and awareness of environmental problems has grown, products (molded bodies) containing poly(methyl methacrylate) used for various applications as described above have been recovered and recycled.

Examples of a method for recycling poly(methyl methacrylate) include material recycling in which a recovered molded body is subjected to a molding step again to produce a new molded body, chemical recycling in which methyl methacrylate is recovered by subjecting a recovered molded body to heat treatment to thermally decompose (depolymerize) poly(methyl methacrylate), and a new molded body is produced using the recovered methyl methacrylate (may be referred to as recycled MMA or recycled MA), and thermal recycling in which a recovered molded body is incinerated as fuel, the combustion energy is directly used as a heat source, and furthermore, the combustion energy is utilized for power generation.

In addition, in response to diversification of applications of poly(methyl methacrylate) in recent years, a technique for improving the quality of poly(methyl methacrylate) has been studied.

For example, as a polymerization apparatus suitable for obtaining high-quality poly(methyl methacrylate), a polymerization apparatus in which formation of a gel in a reaction vessel for reacting a raw material monomer with a polymerization initiator is suppressed has been proposed (see Patent Document 1).

### PRIOR ART DOCUMENT

### PATENT DOCUMENT

Patent Document 1: JP-A-2012-102190

### SUMMARY OF THE INVENTION

### PROBLEMS TO BE SOLVED BY THE INVENTION

In addition to the improvement in the polymerization process of the raw material monomer as described in Patent Document 1, measures for suppressing deterioration in the quality of the raw material monomer during storage can be mentioned as measures for improving the quality of poly(methyl methacrylate).

In view of the above circumstances, an object of an embodiment of the present disclosure is to provide a composition having excellent storage stability, particularly excellent storage stability when stored for a long period of time, a polymer, a cured product, and a molded body obtained using the composition, and a method for producing polymethyl methacrylate using the composition.

### MEANS FOR SOLVING THE PROBLEMS

Means for solving the above problems includes the following embodiments.
<1> A composition containing
   methyl methacrylate and an alcohol having 4 carbon atoms, in which a concentration of the alcohol having 4 carbon atoms is 5 ppm by mass to 10,000 ppm by mass based on the total composition.
<2> The composition according to <1>, in which a content of the methyl methacrylate is 85 mass% or more based on the total composition.
<3> The composition according to <1> or <2>, in which a content of the methyl methacrylate is 90 mass% or more based on the total composition.
<4> The composition according to any one of <1> to <3>, in which the concentration of the alcohol having 4 carbon atoms is 5 ppm by mass to 6,000 ppm by mass based on the total composition.
<5> The composition according to any one of <1> to <4>, in which the concentration of the alcohol having 4 carbon atoms is 50 ppm by mass to 6,000 ppm by mass based on the total composition.
<6> The composition according to any one of <1> to <5>, in which the alcohol having 4 carbon atoms is n-butanol.
<7> The composition according to any one of <1> to <6>, in which the methyl methacrylate includes recycled methyl methacrylate or bio-derived methyl methacrylate.
<8> The composition according to any one of <1> to <7>, further containing a (meth)acrylic acid ester other than the methyl methacrylate.
<9> The composition according to any one of <1> to <7>, further containing a polymer containing a structural unit derived from methyl methacrylate.
<10> A polymer containing a structural unit derived from the methyl methacrylate contained in the composition according to any one of <1> to <9>.
<11> A molded body containing the polymer according to <10>.
<12> A cured product of the composition according to any one of <1> to <9>.
<13> A molded body including the cured product according to <12>.
<14> A method for producing polymethyl methacrylate, the method including polymerizing the methyl methacrylate contained in the composition according to any one of <1> to <9>.

### EFFECT OF THE INVENTION

According to an embodiment of the present disclosure, there are provided a composition having excellent storage stability, particularly excellent storage stability when stored for a long period of time, a polymer, a cured product, and a molded body obtained using the composition, and a method for producing polymethyl methacrylate using the composition.

### MODE FOR CARRYING OUT THE INVENTION

Hereinafter, embodiments of the present invention will be described. However, the present invention is not limited to the following embodiments.

In the present specification, a numerical range indicated using "to" includes numerical values before and after "to" as the minimum value and the maximum value, respectively.

In the numerical ranges described in stages in the present specification, an upper limit value or a lower limit value described in one numerical range may be replaced with an upper limit value or a lower limit value of the numerical range described in another stage. In addition, in the numerical range described in the present specification, the upper limit value or the lower limit value of the numerical range may be replaced with a value shown in Examples.

### <Composition>

A composition of the present disclosure is a composition containing methyl methacrylate and an alcohol having 4 carbon atoms,
in which a concentration of the alcohol having 4 carbon atoms is 5 ppm by mass to 10,000 ppm by mass based on the total mass of the composition.

As shown in Examples described below, the composition of the present disclosure has excellent storage stability.

### (Methyl Methacrylate)

The composition of the present disclosure contains methyl methacrylate.

In the present disclosure, "methyl methacrylate" refers to methyl methacrylate that is substantially free of impurities such as by-products generated during synthesis of methyl methacrylate. However, methyl methacrylate in the present disclosure is not limited thereto, as long as the object of the invention is not impaired. In other words, "methyl methacrylate" may contain impurities that cannot be completely removed by an ordinary purification method or may contain impurities in a content that cannot be detected by an ordinary detection method.

A content of the methyl methacrylate in the composition is not particularly limited, and can be selected according to the application of polymethyl methacrylate obtained using the composition, and the like. The content of the methyl methacrylate may be, for example, 85 mass% or more, 90 mass% or more, 95 mass% or more, or 99 mass% or more based on the total composition.

When the content of the methyl methacrylate in the composition is within the above range, a polymer obtained by polymerizing the composition and a molded body containing the same are preferable from the viewpoint of at least heat resistance or surface hardness thereof.

The methyl methacrylate contained in the composition may be synthesized by a known synthesis method. The synthesis method is not particularly limited, and may be an ACH method, a C4 direct oxidation method, or an alpha method.

The methyl methacrylate contained in the composition may include recycled methyl methacrylate.

In the present disclosure, recycled methyl methacrylate means methyl methacrylate obtained by depolymerization of polymethyl methacrylate (reaction in which a polymer is decomposed to produce a monomer).

The depolymerization of polymethyl methacrylate can be performed, for example, by heat treatment of polymethyl methacrylate.

A supply source of polymethyl methacrylate as a raw material of recycled methyl methacrylate is not particularly limited as long as methyl methacrylate can be recovered. For example, the supply source of polymethyl methacrylate may be a molded body containing polymethyl methacrylate.

The methyl methacrylate contained in the composition may include bio-derived methyl methacrylate.

In the present disclosure, the bio-derived methyl methacrylate means methyl methacrylate synthesized from a bio-derived raw material. The bio-derived raw material may be a plant-derived raw material or an animal-derived raw material, and is preferably a plant-derived raw material.

### (Alcohol Having 4 Carbon Atoms)

The composition of the present disclosure contains an alcohol having 4 carbon atoms. The alcohol having 4 carbon atoms contained in the composition may be at least one selected from the group consisting of n-butanol, isobutyl alcohol, sec-butyl alcohol, and tert-butyl alcohol. From the viewpoint of the storage stability of the composition, the alcohol having 4 carbon atoms is preferably n-butanol.

A concentration of the alcohol having 4 carbon atoms contained in the composition is 5 ppm by mass to 10,000 ppm by mass based on the total composition.

From the viewpoint of long-term storage stability of the composition, the concentration of the alcohol having 4 carbon atoms contained in the composition is preferably 10 ppm by mass or more, more preferably 20 ppm by mass or more, and still more preferably 50 ppm by mass or more based on the total composition.

From the viewpoint of optical stability of the composition, the concentration of the alcohol having 4 carbon atoms contained in the composition is 8,000 ppm by mass or less, more preferably 6,000 ppm by mass or less, and still more preferably 5,000 ppm by mass or less based on the total composition.

In addition, from the viewpoint of heat resistance of a polymer, a cured product, and a molded body, which are described below, formed from the composition, the concentration of the alcohol having 4 carbon atoms contained in the composition is preferably 10 ppm by mass or more based on the total composition, more preferably 20 ppm by mass or more, still more preferably 50 ppm by mass or more, and preferably 6,000 ppm by mass or less based on the total composition.

If necessary, the composition may contain a component that does not correspond to methyl methacrylate and an alcohol having 4 carbon atoms. For example, the composition may contain a (meth)acrylic acid ester other than methyl methacrylate described below, a polymer containing a structural unit derived from methyl methacrylate, a low-content component, or an additive.

### ((Meth)acrylic Acid Ester)

The composition may contain, in addition to methyl methacrylate, a (meth)acrylic acid ester other than methyl methacrylate (hereinafter, also simply referred to as (meth)acrylic acid ester).

Specific examples of the (meth)acrylic acid ester include methyl acrylate, ethyl (meth)acrylate, propyl (meth)acrylate, n-butyl (meth)acrylate, sec-butyl (meth)acrylate, tert-butyl (meth)acrylate, cyclohexyl (meth)acrylate, benzyl (meth)acrylate, 2-ethylhexyl (meth)acrylate, 2-hydroxyethyl (meth)acrylate, and cyclopentanyl (meth)acrylate. Among them, methyl acrylate or ethyl acrylate is preferable, and methyl acrylate is more preferable. These (meth)acrylic acid esters may be used alone or as a mixture of two or more kinds thereof.

In the present disclosure, the "(meth)acrylic acid ester" means an acrylic acid ester or a methacrylic acid ester.

The (meth)acrylic acid ester may be contained in the composition as a by-product generated during the production of methyl methacrylate or the recycling treatment of polymethyl methacrylate, or may be contained in the composition after being intentionally mixed.

When the composition contains a (meth)acrylic acid ester, a concentration thereof is preferably 50,000 ppm by mass or less, more preferably 40,000 ppm by mass or less, and still more preferably 30,000 ppm by mass or less based on the total composition.

When the composition contains another (meth)acrylic acid ester, a concentration thereof may be 1 ppm by mass or more, 2 ppm by mass or more, or 5 ppm by mass or more based on the total composition.

The composition may contain a polymer containing a structural unit derived from methyl methacrylate in addition to methyl methacrylate. The polymer may contain a structural unit derived from methyl methacrylate, and may be a homopolymer of methyl methacrylate or a copolymer of methyl methacrylate and another (meth)acrylic acid ester polymerizable with methyl methacrylate. Examples of the other (meth)acrylic acid ester polymerizable with methyl methacrylate include the same as those described above.

### (Low-Content Component)

The composition may contain a low-content component other than the alcohol having 4 carbon atoms. The low-content component may be contained in the composition as a by-product generated during the production of methyl methacrylate or the recycling treatment of polymethyl methacrylate.

In the present disclosure, the low-content component means a component contained in the composition at a concentration of 10,000 ppm by mass or less.

Examples of the low-content component other than the alcohol having 4 carbon atoms that may be contained in the composition include a carboxylic acid ester, an aromatic hydrocarbon compound, an aliphatic hydrocarbon compound, an alcohol other than the alcohol having 4 carbon atoms, and butyl acrylate.

The low-content component other than the alcohol having 4 carbon atoms contained in the composition may be only one kind or two or more kinds.

Examples of the carboxylic acid ester include methyl isobutyrate, methyl propionate, methyl 2,4-dimethyl-4-pentenoate, methyl 2-methyl-3-butenoate, methyl tiglate, methyl 3-methyl-3-butenoate, methyl 3-methyl-2-butenoate, dimethyl itaconate, and dimethyl 2-methyl-5-methylenehexanedioate.

Specific examples of the aromatic hydrocarbon compound include toluene and styrene.

Specific examples of the aliphatic hydrocarbon compound include 1-octene and 1-octadecene.

When the composition contains low-content components other than the alcohol having 4 carbon atoms, a concentration of each low-content component is 8,000 ppm by mass or less, more preferably 6,000 ppm by mass or less, and still more preferably 5,000 ppm by mass or less based on the total composition.

When the composition contains low-content components other than the alcohol having 4 carbon atoms, a concentration of each low-content component may be 1 ppm by mass or more, 2 ppm by mass or more, or 5 ppm by mass or more based on the total composition.

### (Additive)

If necessary, the composition may contain an additive. Specific examples of the additive include a release agent, a polymerization regulator, a polymerization initiator, an ultraviolet absorber, and a colorant.

The additive contained in the composition may be only one kind or two or more kinds.

Examples of the release agent that may be contained in the composition include a higher fatty acid ester, a higher aliphatic alcohol, a higher fatty acid, a higher fatty acid amide, a higher fatty acid metal salt, and a fatty acid derivative.

Specific examples of the release agent that may be contained in the composition include sodium di(2-ethylhexyl) sulfosuccinate, stearyl alcohol, methyl stearate, and stearamide.

The release agent contained in the composition may be only one kind or two or more kinds.

A content of the release agent in the composition can be, for example, 0.01 mass% to 1.0 mass% based on the total composition.

As the polymerization regulator (an additive for adjusting a polymerization rate in a polymerization reaction) that may be contained in the composition, any suitable conventionally known polymerization regulator can be used. Examples of the polymerization regulator include compounds that can control a polymerization rate so as to reduce the polymerization rate.

Specific examples of the polymerization regulator include mercaptan compounds such as n-butyl mercaptan and n-octyl mercaptan; terpenoid compounds such as limonene, myrcene, α-terpinene, β-terpinene, γ-terpinene, terpinolene, β-pinene, and α-pinene; and an α-methylstyrene dimer.

The polymerization regulator contained in the composition may be only one kind or two or more kinds.

A content of the polymerization regulator in the composition can be, for example, 0.001 mass% to 0.5 mass% based on the total composition.

Examples of the polymerization initiator that may be contained in the composition include a radical polymerization initiator, a diacyl peroxide initiator, a dialkyl peroxide initiator, a peroxyester initiator, a percarbonate initiator, and a peroxyketal initiator.

Specific examples of the radical polymerization initiator include azo compounds such as 1,1'-azobis(cyclohexane-1-carbonitrile), 2,2'-azobis(2,4,4-trimethylpentene), 2,2'-azobis(2-methylpropane), 2-cyano-2-propylazoformamide, 2,2'-azobis(2-hydroxy-methylpropionate), 2,2'-azobis(2-methyl-butyronitrile), 2,2'-azobisisobutyronitrile, 2,2'-azobis[2-(2-imidazolin-2-yl)propane], and dimethyl 2,2'-azobis(2-methylpropionate).

Specific examples of the diacyl peroxide initiator and the dialkyl peroxide initiator include dicumyl peroxide, tert-butyl cumyl peroxide, di-tert-butyl peroxide, benzoyl peroxide, and lauroyl peroxide.

Specific examples of the peroxyester initiator include tert-butyl peroxy-3,3,5-trimethylhexanoate, tert-butyl peroxylaurate, tert-butyl peroxyisobutyrate, tert-butyl peroxyacetate, di-tert-butyl peroxyhexahydroterephthalate, di-tert-butyl peroxyazelate, tert-butyl peroxy-2-ethylhexanoate, 1,1,3,3-tetramethylbutyl peroxy-2-ethylhexanoate, and tert-amyl peroxy-2-ethylhexanoate.

Specific examples of the percarbonate initiator include tert-butyl peroxyallyl carbonate and tert-butyl peroxyisopropyl carbonate.

Specific examples of the peroxyketal initiator include 1,1-di-tert-butylperoxycyclohexane, 1,1-di-tert-butylperoxy-3,3,5-trimethylcyclohexane, and 1,1-di-tert-hexylperoxy-3,3,5-trimethylcyclohexane.

The polymerization initiator contained in the composition may be only one kind or two or more kinds.

A content of the polymerization initiator in the composition can be, for example, 0.01 mass% to 5 mass% based on the total composition.

Examples of the ultraviolet absorber that may be contained in the composition include a benzophenone ultraviolet absorber, a cyanoacrylate ultraviolet absorber, a benzotriazole ultraviolet absorber, a malonic acid ester ultraviolet absorber, and an oxalanilide ultraviolet absorber.

Specific examples of the ultraviolet absorber include 2-(2'-hydroxy-5'-methylphenyl)benzotriazole, 2-hydroxy-4-n-octylbenzophenone, 2-(3-tert-butyl-2-hydroxy-5-methylphenyl)-5-chlorobenzotriazole, 2-(2-hydroxy-3,5-di-tert-pentylphenyl)benzotriazole, and 2,4-di-tert-butylphenyl-3,5-di-tert-butyl-4-hydroxybenzoate.

The ultraviolet absorber contained in the composition may be only one kind or two or more kinds.

A content of the ultraviolet absorber in the composition can be, for example, 0.001 mass% to 1 mass% based on the total composition.

Examples of the colorant that may be contained in the composition include a perylene dye, a perinone dye, a pyrazolone dye, a methine dye, a coumarin dye, a quinophthalone dye, a quinoline dye, an anthraquinone dye, an asdrapyridone dye, a thioindigo dye, a coumarin dye, an isoindolinone pigment, a diketopyrrolopyrrole pigment, a condensed azo pigment, a benzimidazolone pigment, a dioxazine pigment, a copper phthalocyanine pigment, and a quinacridone pigment.

The colorant contained in the composition may be only one kind or two or more kinds.

A content of the colorant in the composition can be, for example, 1.0 × 10⁻⁸ mass% to 0.5 mass% based on the total composition.

When the composition contains an additive, the total content thereof may be 15 mass% or less, 10 mass% or less, 5 mass% or less, or 1 mass% or less based on the total composition.

When the composition contains an additive, the total content thereof may be 0.01 mass% or more, 0.05 mass% or more, or 0.1 mass% or more based on the total composition.

Storage conditions of the composition of the present disclosure are not particularly limited, and can be, for example, 0°C to 35°C. From the viewpoint of ensuring excellent quality, the temperature during storage is preferably selected from a range of 0°C to 39°C, more preferably from a range of about 25°C ± 10°C, and still more preferably from a range of about 25 to 30°C.

The composition of the present disclosure has excellent storage stability. Specifically, it is possible to maintain a state in which the polymerization reaction of the composition during storage is suppressed. In the present disclosure, the storage stability of the composition was determined by evaluating the storage stability by checking the presence or absence of production of a polymer in the composition stored under acceleration conditions and measuring a total light transmittance of the composition stored under acceleration conditions. Hereinafter, a method for evaluating the storage stability and measuring the total light transmittance will be described.

In Examples described below, the evaluation of the storage stability of the composition is performed by (1) preparing a composition containing methyl methacrylate and an alcohol, (2) performing a storage test including the following Steps 1 to 7 in this order, and (3) visually observing the appearance of a solution obtained by dropping the composition after the storage test into a poor solvent in this order.

Step 1: Inject 25 mL of the composition into a lower part of a pressure vessel ("TVS-N2 type" manufactured by Taiatsu Techno Corporation).

Step 2: Place a packing between the upper part and the lower part of the pressure vessel, and seal the pressure vessel.

Step 3: Introduce nitrogen from the tip of the upper part of the pressure vessel, seal the pressure vessel in a state where the internal pressure is 0.2 MPa, and confirm that the internal pressure does not change for 1 minute.

Step 4: Release the internal pressure in the pressure vessel, and attach a closing plug to the tip of the upper part of the pressure vessel.

Step 5: Place the pressure vessel in an oil bath set at 60°C.

Step 6: Store the pressure vessel in the oil bath for 72 hours.

Step 7: After 72 hours have elapsed, take the pressure vessel out of the oil bath and place the pressure vessel in ice-cooled water for quenching.

In (3) above, the poor solvent may be appropriately selected from solvents in which the polymer produced in the composition does not dissolve. In Examples described below, normal hexane is employed. In visual observation, as the degree of turbidity or precipitation occurring in the solution decreases, it can be determined that the polymerization reaction of the methyl methacrylate is further suppressed.

In Examples described below, the total light transmittance of the composition stored under the acceleration conditions is measured by measuring the total light transmittance of the composition after storage. Specifically, using the composition after storage, a total light transmittance Tt (%) is measured for light having a wavelength in a range of 500 nm to 780 nm when an optical path length is 10 mm. For the measurement, a spectrophotometer ("Hitachi Spectrophotometer U-4000", manufactured by Hitachi High-Tech Fielding Corporation) is used; however, any suitable commercially available spectrophotometer may be adopted. As the total light transmittance increases, it can be determined that optical characteristics such as transparency of the composition are maintained. The total light transmittance of the composition stored under the acceleration conditions is preferably more than 97% and more preferably 98% or more.

### <Polymer, Cured Product, and Molded Body>

A polymer of the present disclosure is a polymer containing a structural unit derived from the methyl methacrylate contained in the composition of the present disclosure described above. Here, the polymer is obtained by polymerizing a component contained in the composition that is involved in polymerization, and contains a structural unit derived from the component involved in polymerization.

The polymer of the present disclosure may contain a structural unit derived from methyl methacrylate contained in the composition of the present disclosure and a structural unit derived from another polymerization component. A weight average molecular weight of the polymer of the present disclosure is not particularly limited, and can be selected according to the application of the polymer.

A cured product of the present disclosure is a cured product of the composition of the present disclosure described above. Here, the cured product is obtained by curing the composition, and may contain a component not involved in polymerization. However, depending on the method for curing the composition, it can also be considered the same as the polymer described above (that is, containing no component that is not involved in polymerization).

A molded body of the present disclosure contains the polymer or cured product of the present disclosure described above. When the cured product can be regarded as identical to the polymer, the molded body contains the polymer of the composition of the present disclosure. The molded body is preferably a molded body containing a cured product obtained by curing only the composition of the present disclosure. The molded body may be an article formed by molding a polymer or a cured product into an arbitrary shape.

### (Physical Properties of Polymer and Cured Product)

The polymer and cured product of the present disclosure have excellent heat resistance and optical characteristics. Specifically, as compared with a polymer or a cured product obtained from a composition which is a composition containing methyl methacrylate and does not contain an alcohol having 4 carbon atoms, while exhibiting a similar Vicat softening temperature, it exhibits a tendency in which the total light transmittance in light having a wavelength in a range of 380 nm to 780 nm after an accelerated deterioration treatment is less likely to decrease.

The Vicat softening temperature indicates heat resistance in the polymer and the cured product. Specifically, it is an indicator of resistance to deformation in a high-temperature environment. When the Vicat softening temperature is high, for example, when the polymer or the cured product is used outdoors, the polymer or the cured product is less likely to deform even when exposed to a high temperature in direct sunlight or the like, making its use possible. In the present disclosure, the Vicat softening temperature can be measured by any suitable conventionally known method using any suitable conventionally known apparatus. In Examples described below, a Vicat softening temperature was measured in accordance with JIS K7206 (B50 method) using a heat distortion tester ("148-6 series", manufactured by YASUDA SEIKI SEISAKUSHO, LTD.). As the test piece used for measurement, for example, a cast plate described below can be used.

A specific measurement method of the Vicat softening temperature will be described below. First, a test piece with a size of 25 mm × 25 mm × 3 mm prepared from a cast plate is stored at 83°C for 16 hours, and then subjected to a conditioning treatment in which the test piece is allowed to cool in a desiccator at 23 ± 5°C for 1 hour or longer. A Vicat softening temperature (°C) of the test piece after the conditioning treatment is measured in accordance with JIS K7206 (B50 method) using a heat distortion tester ("148-6 series", manufactured by YASUDA SEIKI SEISAKUSHO, LTD.).

The optical characteristics, more specifically, the total light transmittance indicates transparency of the polymer and the cured product. In the present disclosure, the measurement of the total light transmittance may be performed after the polymer or the cured product is subjected to an accelerated deterioration treatment. By this method, the transparency after using the polymer or the cured product for a long time can be efficiently evaluated.

In Examples described below, the total light transmittance Tt (%) in light having a wavelength in a range of 380 nm to 780 nm was measured using the molded body after the accelerated deterioration treatment. The measurement was performed using a commercially available spectrophotometer ("Hitachi Spectrophotometer U-4000" manufactured by Hitachi High-Tech Fielding Corporation).

A specific method for measuring the total light transmittance in the present disclosure will be described below. First, a test piece with a size of 50 mm × 50 mm × 3 mm prepared from the polymer or the cured product is subjected to an accelerated deterioration treatment in which the test piece is allowed to stand in a thermostatic chamber ("Vacuum Oven VOS-301SD", manufactured by TOKYO RIKAKIKAI CO., LTD.) set at 80°C for 200 hours. Next, the total light transmittance Tt (%) in light having a wavelength in a range of 380 nm to 780 nm when an optical path length is 50 mm is measured using the test piece after the accelerated deterioration treatment. The measurement is performed using a spectrophotometer ("Hitachi Spectrophotometer U-4000" manufactured by Hitachi High-Tech Fielding Corporation). The total light transmittance of the polymer or cured product after the accelerated deterioration treatment is preferably 81% or more and more preferably 81.5% or more from the viewpoint of optical characteristics.

Whether or not the polymer and the cured product of the present disclosure contain methyl methacrylate, an alcohol having 4 carbon atoms, or other components can be identified by a known analysis method. Examples of the known analysis method include gas chromatography and liquid chromatography.

### <Method for Producing Polymethyl Methacrylate>

The method for producing polymethyl methacrylate of the present disclosure is a method for producing polymethyl methacrylate, the method including polymerizing methyl methacrylate contained in the composition of the present disclosure described above. Here, the polymethyl methacrylate of the present disclosure also corresponds to a polymer obtained from the composition of the present disclosure, and also corresponds to a cured product obtained from the composition.

The method for polymerizing methyl methacrylate contained in the composition is not particularly limited, and the polymerization may be performed by a known method. For example, the polymerization may be performed by a method such as bulk polymerization, cell cast polymerization, solution polymerization, suspension polymerization, or emulsion polymerization.

Specifically, a sheet (molded body) obtained by molding a polymer of methyl methacrylate from the composition of the present disclosure by, for example, a bulk polymerization method can be obtained. In addition, in cell cast polymerization, a cured product (molded body) obtained by curing the composition can be obtained by performing heat treatment under predetermined heating conditions to advance the polymerization reaction.

In the method for polymerizing methyl methacrylate contained in the composition of the present disclosure or the method for producing a molded body, the heating temperature and heating time among the heating conditions can be set, for example, in consideration of the type and content of the selected polymerization regulator, polymerization initiator, and/or other components.

In the cell cast polymerization, the heating temperature can be set to, for example, 50°C to 120°C in producing a cured product and a molded body thereof. In addition, the heating time in the production can be, for example, 1 hour to 20 hours. In addition, the heat treatment may be a heat treatment including a plurality of steps with different heating temperatures and/or heating times.

A cured product obtained by cell cast polymerization and a molded body thereof can be produced by heat treatment under heating conditions including, for example, the following Steps 1 to 7.

Step 1: Raise the temperature from room temperature to 68°C for 20 minutes.

Step 2: Maintain the temperature at 68°C for 90 minutes.

Step 3: Lower the temperature from 68°C to 64°C for 20 minutes.

Step 4: Maintain the temperature at 64°C for 90 minutes.

Step 5: Raise the temperature from 64°C to 123°C for 10 minutes.

Step 6: Maintain the temperature at 123°C for 120 minutes.

Step 7: Lower the temperature from 123°C to room temperature for 78 minutes.

In the method for producing a cured product and a molded body thereof, Steps 1 to 7 are performed in this order, such that it is possible to suppress heat generation during the polymerization reaction and to stably complete the polymerization.

In the heat treatment of the composition of the present disclosure, for example, a cell cast method (cell cast polymerization) is applied using a cell that defines a predetermined-shaped sealed space inside the cell, thereby forming a molded body with a predetermined shape. Hereinafter, a method for producing a molded body by the cell cast method will be described in detail.

In producing a molded body by the cell cast method, first, a cell is prepared. Here, an example of forming a plate-like molded body (may be referred to as "cast plate") will be described.

Such a cell can include at least two flat-plate members and a seal material (gasket) that is disposed so as to be sandwiched between the two flat-plate members and can seal a gap between the two opposing flat-plate members as a closed space.

The flat-plate member may be in the form of a single sheet or a belt. The flat-plate member is composed of a material that is not dissolved by the composition of the present disclosure, does not inhibit the polymerization reaction of the composition, and has sufficient heat resistance for the heating temperature during the heat treatment. Examples of a preferred material for the flat-plate member include glass and a metal.

As the seal material, any suitable conventionally known seal material may be used. The seal material includes a material that is not dissolved by the composition of the present disclosure, does not inhibit the polymerization reaction of the composition, and has sufficient heat resistance for the heating temperature during the heat treatment. Specific examples of a preferred seal material include a vinyl chloride resin gasket.

Next, the composition of the present disclosure is injected into a gap (void) defined by the cell prepared as described above by any suitable conventionally known method. Thereafter, the cell is subjected to heat treatment under the heating conditions described above. The method of the heat treatment for the cell into which the composition of the present disclosure is injected is not particularly limited. Similarly to the conventionally known cell cast method, the method of the heat treatment for the cell can be a method of directly performing heat treatment from the outside of the cell using, for example, a hot air circulation furnace or an infrared heater, and a method of further providing any suitable conventionally known jacket outside the cell and introducing a heat medium such as hot air, hot water, and water vapor into the jacket.

### <Applications of Polymethyl Methacrylate and Molded Body Thereof>

Polymethyl methacrylate obtained from the composition of the present disclosure and a molded body thereof have excellent light transmittance, heat resistance, and weather resistance. Therefore, the polymethyl methacrylate obtained from the composition of the present disclosure and the molded body thereof can be suitably applied to various applications that may be exposed to an external environment and further to heat sources or light sources, such as lighting equipment, automobile parts, signboards, and building materials.

### EXAMPLES

Hereinafter, embodiments of the present disclosure will be described based on Examples. The following Examples are not intended to limit the present disclosure.

### <Example 1>

A composition 1 was prepared by mixing 99.999 mass% of methyl methacrylate with 0.001 mass% of n-butanol (manufactured by FUJIFILM Wako Pure Chemical Corporation) as an alcohol. The resulting composition 1 was in a liquid state.

### <Examples 2 to 5 and Comparative Examples 1 to 6>

Compositions were prepared in the same manner as in Example 1, except that the alcohol added to methyl methacrylate and the concentration (ppm by mass) thereof were changed as shown in Table 1 from Example 1. All of the resulting compositions were in a liquid state.

As the alcohol, n-butanol, methanol, or ethanol (each manufactured by FUJIFILM Wako Pure Chemical Corporation) was used.

### (1) Evaluation of Storage Stability of Composition

The compositions prepared in Examples 1 to 5 and Comparative Examples 1 to 6 were subjected to a storage test including the following Steps 1 to 7 in this order. The storage test was performed under acceleration conditions (60°C) in order to evaluate the stability after long-term storage.

Step 1: Into a lower part of a pressure vessel ("TVS-N2 type" manufactured by Taiatsu Techno Corporation), 25 mL of the composition was injected.

Step 2: A packing was interposed between the upper part and the lower part of the pressure vessel, and the pressure vessel was sealed.

Step 3: Nitrogen was introduced from the tip of the upper part of the pressure vessel, and sealed in a state where the internal pressure was 0.2 MPa, and it was confirmed whether the internal pressure did not change for 1 minute.

Step 4: The internal pressure in the pressure vessel was released, and a closing plug was attached to the tip of the upper part of the pressure vessel.

Step 5: The pressure vessel was placed in an oil bath set at 60°C.

Step 6: The pressure vessel was stored in the oil bath for 72 hours.

Step 7: After 72 hours had elapsed, the pressure vessel was taken out of the oil bath and placed in ice-cooled water for quenching.

The composition (2 mL) after the storage test was added to normal hexane (10 mL) in a 25 mL bottle, and allowed to stand. Thereafter, the appearance of the solution in the bottle was visually observed, and the state of the solution was evaluated based on the following evaluation criteria. As the degree of turbidity or precipitation occurring in the solution decreases, it can be determined that the polymerization reaction of the methyl methacrylate is further suppressed. The results are shown in Table 1.

### (Evaluation Criteria)

A (excellent): No noticeable turbidity or precipitation was observed.
B (good): Although noticeable turbidity or precipitation was observed, the degree was small.
C (poor): Noticeable turbidity or precipitation was observed, and the degree was significant.

The composition (3 mL) after the storage test was placed in a quartz glass cell (T-1, manufactured by DAICO MFG CO., Ltd.) with a size of 10 mm in length × 10 mm in width × 45 mm in height. Using the composition placed in the quartz glass cell, a total light transmittance Tt (%) was measured for light having a wavelength in a range of 500 nm to 780 nm when an optical path length was 10 mm. The measurement was performed using a spectrophotometer ("Hitachi Spectrophotometer U-4000" manufactured by Hitachi High-Tech Fielding Corporation). As the total light transmittance increases, it can be determined that optical characteristics such as high transparency are maintained even after storage. The results are shown in Table 1.

**[Table 1]**

| | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Alcohol | n-Butanol [ppm] | 10 | 100 | 500 | 3000 | 7000 | 0 | 0 | 0 | 0 | 0 | 0 |
| | Methanol [ppm] | 0 | 0 | 0 | 0 | 0 | 0 | 500 | 1000 | 3000 | 0 | 0 |
| | Ethanol [ppm] | 0 | 0 | 0 | 0 | 0 | 0 | 0 | 0 | 0 | 1000 | 3000 |
| Evaluation of composition | Visual observation evaluation | A | A | A | A | A | C | B | B | B | B | B |
| | Total light transmittance [%] | 98.7 | 98.4 | 98.4 | 98.4 | 97.0 | 98.6 | 98.9 | 98.5 | 98.4 | 97.6 | 98.2 |

As shown in Table 1, in the compositions of Examples 1 to 5 in which n-butanol was added to methyl methacrylate, the polymerization reaction of methyl methacrylate in the storage test was suppressed as compared with Comparative Example 1 in which an alcohol was not added to methyl methacrylate, Comparative Examples 2 to 4 in which methanol was added to methyl methacrylate, or Comparative Examples 5 and 6 in which ethanol was added to methyl methacrylate. From these results, it was found that the compositions of Examples 1 to 5 exhibited excellent storage stability.

### (2) Physical Property Evaluation of Molded Body

Molded bodies were prepared using the compositions of Examples 1 to 5 and Comparative Example 1, and the following physical properties were evaluated.

The composition (99.85 parts by mass) prepared as described above, sodium di(2-ethylhexyl) sulfosuccinate (0.05 parts by mass) as a release agent, terpinolene (0.01 parts by mass) as a polymerization regulator, 2,2'-azobisisobutyronitrile (0.08 parts by mass) as a polymerization initiator, and 2-(2'-hydroxy-5'-methylphenyl)benzotriazole (0.01 parts by mass) as an ultraviolet absorber were added to a glass container and mixed to obtain a composition for forming a molded body. The resulting composition was in a solution state.

A cell was prepared by sandwiching a vinyl chloride resin gasket having a thickness of 3.8 mm between two opposing glass plates, thereby defining a space whose periphery was sealed with the gasket between the two glass plates. The composition for forming a molded body prepared as described above was injected into this space. The cell into which the composition was injected was placed in an oven and subjected to heat treatment under heating conditions including the following Steps 1 to 7 in this order to polymerize methyl methacrylate. Thus, a cast plate as a molded body with a size of 250 mm × 250 mm × 3 mm was produced.

Step 1: The temperature was raised from room temperature to 68°C for 20 minutes.

Step 2: The temperature was maintained at 68°C for 90 minutes.

Step 3: The temperature was lowered from 68°C to 64°C for 20 minutes.

Step 4: The temperature was maintained at 64°C for 90 minutes.

Step 5: The temperature was raised from 64°C to 123°C for 10 minutes.

Step 6: The temperature was maintained at 123°C for 120 minutes.

Step 7: The temperature was lowered from 123°C to room temperature for 90 minutes.

In order to evaluate the heat resistance of the obtained molded body, the following test was performed.

A test piece with a size of 25 mm × 25 mm × 3 mm prepared from the cast plate was allowed to stand at 83°C for 16 hours, and then subjected to a conditioning treatment in which the test piece was allowed to cool in a desiccator at 23 ± 5°C for 1 hour or longer. A Vicat softening temperature (°C) of the test piece after the conditioning treatment was measured in accordance with JIS K7206 (B50 method) using a heat distortion tester ("148-6 series", manufactured by YASUDA SEIKI SEISAKUSHO, LTD.). The results are shown in Table 2.

In order to evaluate the optical characteristics of the obtained molded body after an accelerated deterioration treatment, the following test was performed.

A test piece with a size of 50 mm × 50 mm × 3 mm prepared from the cast plate was subjected to an accelerated deterioration treatment in which the test piece was allowed to stand in a thermostatic chamber ("Vacuum Oven VOS-301SD", manufactured by TOKYO RIKAKIKAI CO., LTD.) set at 80°C for 200 hours. The total light transmittance Tt (%) in light having a wavelength in a range of 380 nm to 780 nm when an optical path length was 50 mm was measured using the test piece after the accelerated deterioration treatment. The measurement was performed using a spectrophotometer ("Hitachi Spectrophotometer U-4000" manufactured by Hitachi High-Tech Fielding Corporation). When the total light transmittance is 81% or more, the total light transmittance of the molded body after the accelerated deterioration treatment can be evaluated as good. The results are shown in Table 2.

**[Table 2]**

| | | Example 1 | Example 2 | Example 3 | Example 4 | Example 5 | Comparative Example 1 |
|---|---|---|---|---|---|---|---|
| Alcohol | n-Butanol [ppm] | 10 | 100 | 500 | 3000 | 7000 | 0 |
| Evaluation of molded body | Vicat softening temperature [°C] | 115.6 | 115.5 | 115.4 | 113.2 | 110.0 | 116.0 |
| | Total light transmittance [%] | 82.2 | 81.8 | 82.0 | 82.2 | 82.5 | 80.8 |

As shown in Table 2, in the molded bodies produced using the compositions of Examples 1 to 5, the Vicat softening temperature was equivalent to that in Comparative Example 1 in which an alcohol was not added to methyl methacrylate, and the total light transmittance after the accelerated deterioration treatment showed a high value. From these results, it was found that the molded bodies produced using the compositions of Examples 1 to 5 exhibited excellent heat resistance and excellent optical characteristics even when used for a long period of time.

## Claims

1. A composition comprising
methyl methacrylate and an alcohol having 4 carbon atoms,
wherein a concentration of the alcohol having 4 carbon atoms is 5 ppm by mass to 10,000 ppm by mass based on the total composition.

2. The composition according to claim 1, wherein a content of the methyl methacrylate is 85 mass% or more based on the total composition.

3. The composition according to claim 1, wherein a content of the methyl methacrylate is 90 mass% or more based on the total composition.

4. The composition according to claim 1, wherein the concentration of the alcohol having 4 carbon atoms is 5 ppm by mass to 6,000 ppm by mass based on the total composition.

5. The composition according to claim 1, wherein the concentration of the alcohol having 4 carbon atoms is 50 ppm by mass to 6,000 ppm by mass based on the total composition.

6. The composition according to claim 1, wherein the alcohol having 4 carbon atoms is n-butanol.

7. The composition according to claim 1, wherein the methyl methacrylate includes recycled methyl methacrylate or bio-derived methyl methacrylate.

8. The composition according to claim 1, further comprising a (meth)acrylic acid ester other than the methyl methacrylate.

9. The composition according to claim 1, further comprising a polymer containing a structural unit derived from methyl methacrylate.

10. A polymer comprising a structural unit derived from the methyl methacrylate contained in the composition according to any one of claims 1 to 9.

11. A molded body comprising the polymer according to claim 10.

12. A cured product of the composition according to any one of claims 1 to 9.

13. A molded body comprising the cured product according to claim 12.

14. A method for producing polymethyl methacrylate, the method comprising polymerizing the methyl methacrylate contained in the composition according to any one of claims 1 to 9.
